# EUROPÄISCHE PATENTSCHRIFT

(11) **EP 1 031 459 B1**
(45) Veröffentlichungstag und Bekanntmachung des Hinweises auf die Patenterteilung: **20.12.2006**
(21) Anmeldenummer: 00103265.5
(22) Anmeldetag: 17.02.2000
(51) Int. Cl.: B60N 2/52, B60N 2/04

(54) **Sitz für ein Fahrzeug**
Vehicle seat
Siège de véhicule

(30) Priorität: 23.02.1999 DE 19907658
(43) Veröffentlichungstag der Anmeldung: 30.08.2000
(73) Patentinhaber: Bayerische Motoren Werke Aktiengesellschaft, 80809 München (DE)
(72) Erfinder: Kirchknopf, Peter, Dr., 81547 München (DE); Weber, Johann, 85229 Markt Indersdorf (DE); Schuchmann, Reiner, 81927 München (DE)

(56) Entgegenhaltungen:
- EP-A- 0 029 883
- FR-A- 2 357 397
- US-A- 2 588 638
- US-A- 5 398 917
- US-A- 5 536 059
- PATENT ABSTRACTS OF JAPAN vol. 1997, no. 12, 25. Dezember 1997 (1997-12-25) -& JP 09 209406 A (SHIN CATERPILLAR MITSUBISHI LTD), 12. August 1997 (1997-08-12)
- PATENT ABSTRACTS OF JAPAN vol. 1995, no. 10, 30. November 1995 (1995-11-30) -& JP 07 186804 A (MAZDA MOTOR CORP), 25. Juli 1995 (1995-07-25)

## Beschreibung

Die Erfindung bezieht sich auf einen Sitz für ein Fahrzeug nach dem Oberbegriff des Anspruchs 1.

Insbesondere bei offenen Fahrzeugen treten aufgrund der bauartbedingt torsionsweicheren Fahrzeugstruktur stärkere Zitterschwingungen auf als dies bei Fahrzeugen mit einem geschlossenen Aufbau der Fall ist. Dadurch werden mit der Fahrzeugstruktur verbundene Bauteile, wie beispielsweise ein Fahrzeugsitz, einer stärkeren Schwingungsbelastung ausgesetzt. Unter anderem treten hierbei Schwingungen um eine Querachse des Sitzes auf, nachfolgend auch als Nickschwingungen bezeichnet. Von den Fahrzeuginsassen werden diese Nickschwingungen, insbesondere an der Rückenlehne, als besonders störend empfunden.

Bekannte Systeme zur Dämpfung niederfrequenter vertikaler Schwingungen eines Fahrzeugsitzes, wie sie beispielsweise aus der DE 42 28 061 C1 bekannt sind, sind prinzipbedingt nicht in der Lage, Nickschwingungen eines Sitzes zu dämpfen, die zudem in einem höheren Frequenzbereich auftreten.

Aufgabe der Erfindung ist es, einen Sitz für ein Fahrzeug bereitzustellen, der die oben genannten Nachteile vermeidet.

Diese Aufgabe wird durch einen Sitz mit den Merkmalen des Anspruchs 1 gelöst.

Im Zusammenhang mit der vorliegenden Erfindung ist unter den vorstehend und nachfolgend gebrauchten Begriffen "dämpfen", "Dämpfung", "Dämpfungselement" etc. jeweils die Kombination aus Schwingungsdämpfung und Schwingungsisolation zu verstehen, da neben der erfindungsgemäß angestrebten Schwingungsisolation im überkritischen Bereich, die durch entsprechende Auslegung des Schwingsystems erzielt wird, auch der Betrieb in der Resonanzfrequenz ausreichend bedämpft werden muß. Ebenso ist aus Gründen einer einheitlichen Begriffswahl die durch einen Schwingerreger (Anspruch 7) erreichte Reduzierung der Nickschwingungen des Sitzes als "Schwingungsdämpfung" bezeichnet.

Die Erfindung läßt sich mit besonderen Vorteilen bei Fahrzeugen einsetzen, die mit sitzintegrierten Gurtsystemen ausgestattet sind. Sitze mit integrierten Sicherheitsgurten sind aufgrund der an sie gestellten Sicherheits- und Festigkeitsanforderungen sehr steif ausgeführt, so daß die über die Karosserie eingeleiteten Schwingungen allein durch die Federungs- und Dämpfungseigenschaften der Sitzstruktur und der Polsterung des Sitzes nicht ausreichend gedämpft werden können.

Aus der DE 196 47 649 A1 ist zwar eine Einrichtung zur Dämpfung der Rotationsbewegung einer Rückenlehne eines Sitzes um eine Querachse des Sitzes bekannt. Diese Dämpfungseinrichtung hat jedoch die Aufgabe, bei einer hohen Beschleunigungskraft, wie sie beispielsweise bei einem Fahrzeugaufprall auftritt, eine gedämpfte Ausweichbewegung der Rückenlehne zu ermöglichen. Die Dämpfung höherfrequenter Nickschwingungen des Sitzteils und/oder der Rückenlehne ist mit der bekannten Einrichtung nicht möglich.

Die EP 0 029 883 A1 welche als nächster Stand der Technik gegenüber einem Sitz nach Anspruch 1 angesehen wird beschreibt allgemein einen Sitz, bei dem Nickschwingungen durch ein hydraulisches System gedämpft werden können.

Die US-A-2,588,638 betrifft einen Sitz für ein landwirtschaftliches Fahrzeug, der über lediglich eine quer zur Fahrtrichtung verlaufende Schwenkachse verfügt. Die Lagerung weist dabei eine ringförmige Einlage aus gummiartigem Material auf. Aufgrund der großen Länge des Armes 11 handelt es sich hierbei faktisch jedoch um die Dämpfung von horizontalen Schwingungen des Sitzes.

Auch die FR 2 357 397 A1 betrifft einen Sitz für ein landwirtschaftliches Fahrzeug oder eine Arbeitsmaschine mit einer Dämpfungseinrichtung in Form eines elastischen Elementes in einer Buchse außerhalb der Sitzlagerung.

Vorteilhafte Ausgestaltungen der Erfindung sind Gegenstand der Unteransprüche.

Mögliche Ausführungsbeispiele der Erfindung sind in der Zeichnung dargestellt und werden nachfolgend näher erläutert. Es zeigen:
- Fig. 1, 2 ,3a bis 3c: schematische Darstellungen erfindungsgemäßer Fahrzeugsitze, mit Einrichtungen zur Dämpfung von Nickschwingungen des gesamten Sitzes,
- Fig. 4 und 5: erfindungsgemäße Fahrzeugsitze mit Einrichtungen zur Dämpfung von Nickschwingungen der Rückenlehne,
- Fig. 6: eine vergrößerte und detaillierte Darstellung des Sitzes von Fig. 1 und
- Fig. 7: einen Schnitt entlang der Schnittverlaufslinie VII-VII in Fig. 6.

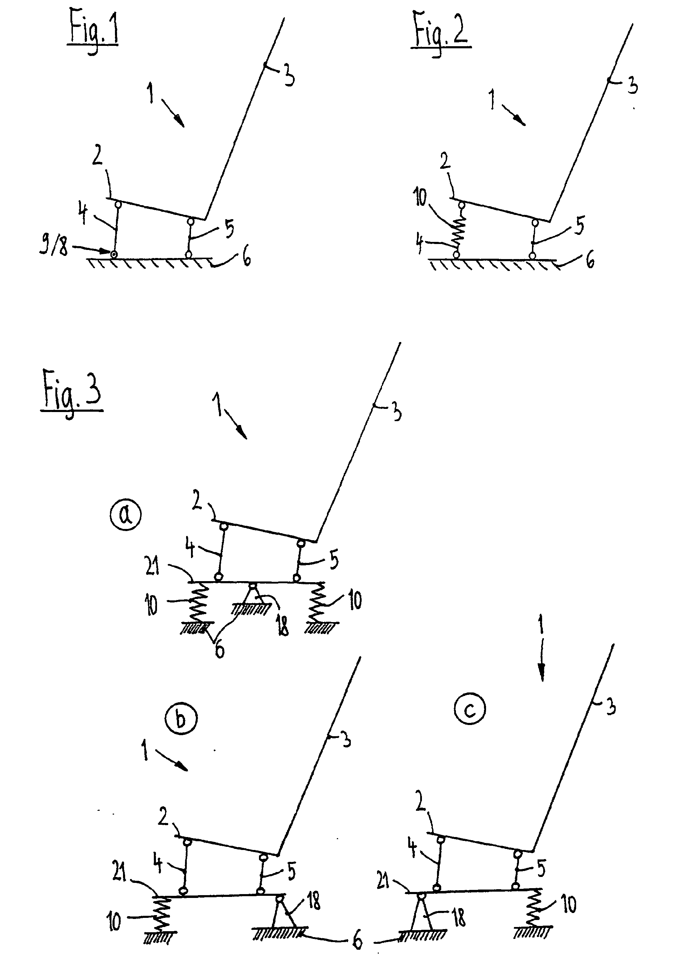

Die Fig. 1 bis 5 zeigen jeweils einen Sitz 1 mit einem Sitzteil 2 und einer Rückenlehne 3. Das Sitzteil 2 ist hierbei über vordere und hintere Lenker 4 bzw. 5 mit der Karosserie 6 des Fahrzeugs verbunden.

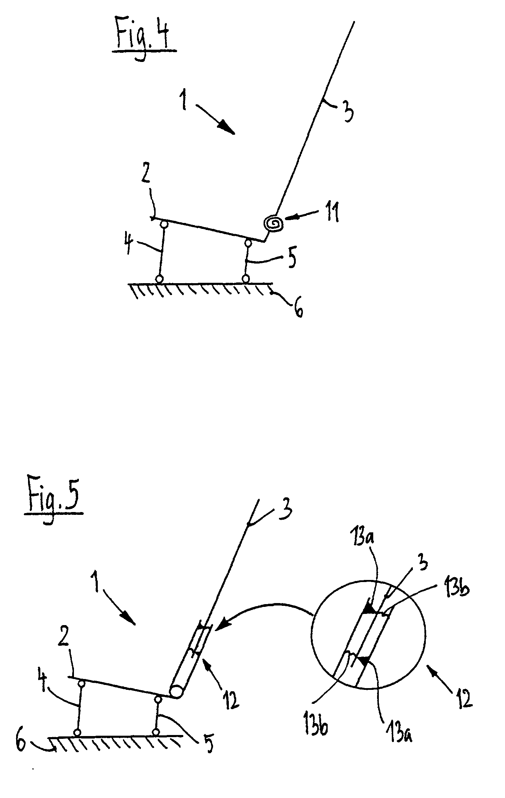

Zur Vermeidung von Schwingungen des Sitzes 1 um seine Querachse (Nickschwingungen) ist gemäß Fig. 1 an zumindest einer Lagerung des vorderen Lenkers 4 eine Lagerbuchse 8 mit einem Elastomerkörper 9 vorgesehen, wie in den Fig. 6 und 7 näher dargestellt. Alternativ ist in den vorderen Lenker 4 des Sitzes 1 entlang der Lenkerlängsachse ein Dämpfungselement 10 integriert (Fig. 2). Die Lagerbuchse 8 bzw. das Dämpfungselement 10 können selbstverständlich gleichwirkend am hinteren Lenker 5 vorgesehen sein.

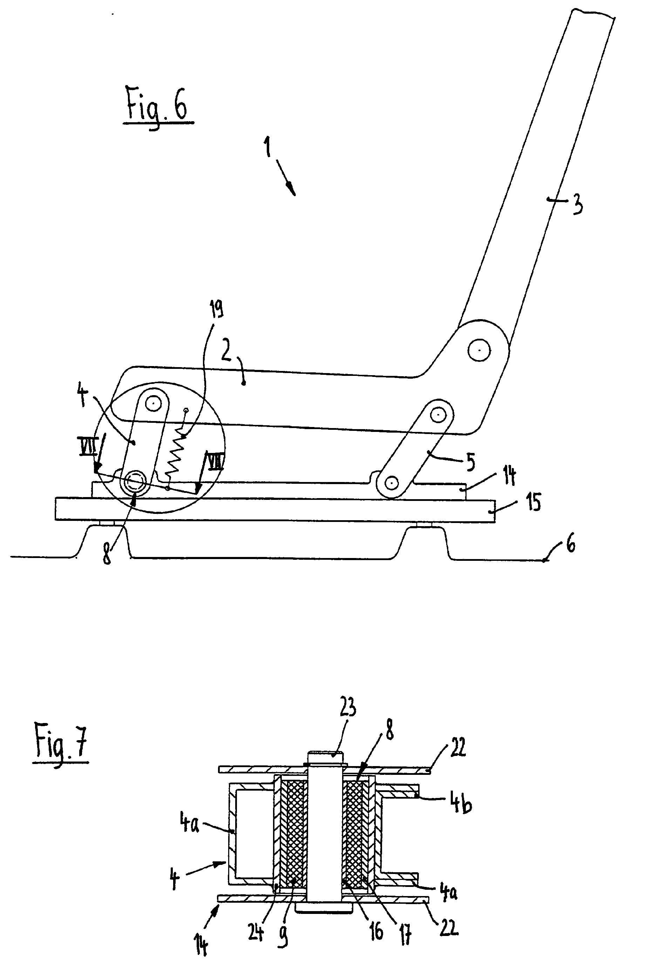

Die Fig. 3a bis 3c zeigen jeweils einen Sitz 1, der über Lenker 4 und 5 mit einem Sitzunterbau 21 verbunden ist. Das bzw. die schwingungsdämpfenden Elemente 10 sind zwischen dem Sitzunterbau 21 und der Karosserie 6 so angeordnet, daß in allen Fällen ein Ausgleich von Nickschwingungen möglich ist. Hierzu ist zusätzlich jeweils wenigstens ein Lager 18 zur Einschränkung der Freiheitsgrade der Bewegung des Sitzes 1 vorgesehen.

Die Fig. 4 und 5 zeigen jeweils einen Sitz 1, dessen Rückenlehne 3 über ein schwingungsdämpfendes Lagerelement 11 bzw. 12 mit dem Sitzteil verbunden ist. Das Lagerelement 11 gemäß Fig. 4 ist hierbei ähnlich einer Wickelfeder ausgebildet, während das Lagerelement 12 gemäß Fig. 5 die Federungs- und Dämpfungseigenschaften über zwei im Abstand voneinander angeordnete und sich paarweise gegenüberliegende Federelemente 13a und 13b bezieht.

Die Federelemente 13a und 13b weisen im dargestellten Ausführungsbeispiel nichtlineare Kennlinien auf, um den gestellten Sicherheitsanforderungen und Komfortansprüchen gerecht zu werden. Grundsätzlich können derartige Kennlinien bei allen erfindungsgemäßen schwingungsdämpfenden Einrichtungen realisiert werden.

Fig. 6 zeigt den Sitz 1 von Fig. 1 in vergrößerter Detaildarstellung. Der Sitz 1 ist über seine Lenker 4 und 5 mit dem Oberteil 14 einer Sitzschiene 15 verbunden, die ihrerseits an der Bodenstruktur der Karosserie 6 befestigt ist. Die beiden vorderen Lenker 4 weisen an ihren unteren Endabschnitten jeweils eine Lagerbuchse 8 auf. Die Lagerbuchsen 8 können auch an den oberen Endabschnitten der Lenker 4 angeordnet sein.

In Fig. 7 ist der Aufbau der Lagerbuchse 8 näher dargestellt. Das Oberteil 14 der Sitzschiene 15 ist, abweichend von der vereinfachenden Darstellung der Fig. 6, als U-Profil ausgeführt, zwischen dessen Schenkeln 22 der Lenker 4 über die Lagerbuchse 8 und einen Bolzen 23 schwenkbar gelagert ist. Die Lagerbuchse 8 besteht aus einer inneren und einer äußeren Hülse 16 bzw. 17, zwischen denen sich ein Elastomerkörper 9 befindet, durch dessen geometrische Ausgestaltung sich nichtlineare Kennlinien, auch mit Anschlagfunktion, realisieren lassen. Die äußere Hülse 17 ist in eine zylindrische Aufnahme 24 des Lenkers 4 eingepreßt. Der Lenker 4 setzt sich aus einem ersten U-Profil 4a sowie einem zweiten versteifenden U-Profil 4b zusammen.

Parallel zu einem oder beiden Lenkern 4 ist eine Kompensationsfeder 19 angeordnet, durch die eine Vorlast des Sitzes 1 ausgeglichen wird. Durch die Kompensation der statischen Vorlast (Gewicht des Sitzes selbst sowie des Insassens) auf den Elastomerkörper 9 kann das System in seinem optimalen Arbeitsbereich arbeiten. Je nach statischer Belastung der Lagerbuchse 8 durch die Gewichtskraft von Sitz 1 und Fahrzeuginsassen einerseits und durch das vom Insassen auf die Rückenlehne ausgeübte Moment andererseits ist die Kompensationsfeder 19 als Zugfeder oder als Druckfeder auszubilden. Ziel ist hierbei, durch die zum Elastomerkörper 9 parallel geschaltete Kompensationsfeder 19 für die Lagerbuchse 8 eine nahezu kräftefreie "Null-Lage" zu erzeugen. Die Kompensationsfeder 19 hat gegenüber der Federrate des Elastomerkörpers 9 der Lagerbuchse 8 vorzugsweise eine flache Federkennlinie, um in der Gesamtfunktion die Kennlinie des elastomerkörpers 9 möglichst wenig zu beeinflussen.

Bei der Darstellung gemäß den Fig. 1 bis 3 sowie 6 erfolgt die Entkopplung des Sitzes 1 von Nickschwingungen gemeinsam für das Sitzteil 2 und die Rückenlehne 3, ohne daß Sitzteil 2 und Rückenlehne 3 eine Relativbewegung zueinander ausführen. Je nach den konstruktiven Gegebenheiten kann es jedoch auch ausreichend sein, allein die Nickschwingungen der Rückenlehne 3 durch eine Ausgestaltung der Erfindung gemäß den Fig. 4 und 5 zu dämpfen.

Die Lagerbuchsen 8 können nur an den vorderen oder nur an den hinteren Lenkern 4 bzw. 5, jeweils an vorderen und hinteren Lenkern 4 und 5, an beiden Seiten des Sitzes 1 oder nur einseitig vorgesehen sein. Hierbei ist wiederum die Anordnung einer Lagerbuchse 8 nur an einem oder an beiden Endabschnitten der Lenker 4 bzw. 5 möglich. Welche Anordnung getroffen wird, hängt von der jeweilig ausgeführten Verstellmechanik des Sitzes 1, der Steifigkeit von Sitzstruktur und/oder Fahrzeugstruktur und den tatsächlich auftretenden Schwingungsbelastungen ab. Grundsätzlich können die Lagerbuchsen 8 an jeder beliebigen Stelle der Verstellmechanik des Sitzes 1 angeordnet werden.

So ist es beispielsweise bei einer Fahrzeugstruktur, bei der die Einleitung von Schwingungen maßgeblich im fahrzeugaußenseitigen Anbindungsbereich der Sitze 1 erfolgt, während im fahrzeuginnenseitigen Bereich eines Mitteltunnels nur vergleichsweise geringe Schwingamplituden auftreten, unter Umständen ausreichend, erfindungsgemäße Lagerbuchsen 8 nur an der Außenseite der Sitze 1 vorzusehen, eine entsprechende Torsionsweichheit der Sitzstruktur selbst vorausgesetzt.

Den schwingungsdämpfenden Einrichtungen, nämlich der Lagerbuchse 8, dem Dämpfungselement 10 sowie den Lagerelementen 11 und 12 ist jeweils gemeinsam, daß sie hinsichtlich ihres Frequenzganges und ihrer Dämpfungseigenschaften so ausgelegt sind, daß sie gezielt die Nickschwingungen des Fahrzeugsitzes 1 bzw. der Rückenlehne 3 von der Fahrzeugstruktur entkoppeln und dämpfen. Diese Nickschwingungen gehen auf eine Anregung durch die Torsionseigenschwingungen der Fahrzeugkarosserie, insbesondere der Karosserie eines oben offenen Fahrzeuges, zurück. Die Anregung kann durch das Oberflächenprofil der Fahrbahn und/oder durch dynamische Kräfte im Antriebsstrang, insbesondere auch bei Leerlaufdrehzahl des Antriebaggregates, erfolgen. Die Torsionseigenschwingungen haben eine Frequenz von ca. 10 bis 45 Hz und führen zu Schwingwegen in der Größenordnung von 0,1 bis 5 mm in der Lagerbuchse 8. Die schwingungsdämpfende Einrichtung arbeitet bevorzugt unter Verwendung eines Elastomerwerkstoffes, der zusätzlich zu seinen Federungseigenschaften eine vergleichsweise hohe innere Reibung aufweist und hierdurch die auftretenden Schwingungen wirksam bedämpft. Mögliche Elastomerwerkstoffe sind z. B. Kautschuk, Gummi, PUR etc.

Die schwingungsdämpfende Einrichtung kann anstelle eines Elastomerkörpers beispielsweise auch ein flüssigkeitsgedämpftes Element mit einer Drossel aufweisen. Derartige Elemente haben den Vorteil, daß durch Veränderung des Drosselquerschnittes oder durch Veränderung der Viskosität der Flüssigkeit eine Veränderung der Dämpfungs- und Federungseigenschaften des Dämpfungselementes möglich ist. Diese Veränderung der Dämpfungs- und Federungseigenschaften kann mittels einer Steuerungs- oder Regelungseinrichtung sowie entsprechender Sensorik auch in Abhängigkeit von den im Fahrbetrieb eingeleiteten Schwingungen und/oder fahrzeugseitigen Parametern erfolgen. Somit kann, in Abhängigkeit von verschiedenen Randbedingungen, wie beispielsweise dem Gewicht eines Fahrzeuginsassens, der Beschaffenheit der Fahrbahn, der Fahrweise etc. die Kennung der Dämpfungselemente selbsttätig oder durch Vorwahl über den Fahrzeuginsassen verändert werden.

So ist beispielsweise die Wahl zwischen einer weichen und einer harten Kennlinie für komfortbetonte bzw. sportliche Fahrweise vorstellbar. Die Umschaltung zwischen den beiden Kennlinien kann z. B. in Abhängigkeit von der gewählten Charakteristik eines Automatikgetriebes selbsttätig erfolgen. Alternativ ist eine Einstellung individuell durch den Fahrzeuginsassen denkbar. Besonders vorteilhaft ist der selbsttätige Übergang von einer weichen zu einer sehr harten Kennung für den Fall eines Fahrzeugaufpralls, um die Nachgiebigkeit des Fahrzeugsitzes 1 unter dieser Extrembedingung zu minimieren. Insbesondere für den letztgenannten Anwendungsfall sind rheologische Flüssigkeiten innerhalb des Dämpfungselementes in besonderer Weise geeignet, eine schlagartig erfolgende Verhärtung des Dämpfungselementes zu erzeugen.

In weiterer Ausgestaltung der Erfindung kann ein elektrodynamischer oder elektrohydraulischer Aktuator eingesetzt werden, der durch entgegengesetzt zur Schwingungsanregung gerichtete Eigenschwingungen die Schwingungskräfte im Sitz 1 weitestgehend kompensiert. Auch hier ist eine Steuerungs- oder Regelungseinrichtung mit entsprechender Sensorik erforderlich.

## Patentansprüche

1. Sitz für ein Fahrzeug, mit einem Sitzteil (2) und einer Rückenlehne (3), sowie einer Einrichtung zur Dämpfung von Schwingungen des Sitzteils (2) und/oder der Rückenlehne (3) um eine Querachse des Sitzes (1),
**dadurch gekennzeichnet, daß** der Sitz (1) ein sitzintegriertes Gurtsystem aufweist und die Einrichtung in eine Lagerung des Sitzteils (2) oder der Rückenlehne (3) an der Karosserie (6) des Fahrzeuges oder in eine Lagerung der Rückenlehne (3) am Sitzteil (2) integriert ist und wenigstens ein schwingungsdämpfendes Lagerelement aufweist, durch das eine Schwingungsisolation im überkritischen Bereich erzielt wird.

2. Sitz nach Anspruch 1,
**dadurch gekennzeichnet, daß** das Lagerelement einen Bestandteil aus einem Elastomerwerkstoff aufweist.

3. Sitz nach Anspruch 1 oder 2,
**dadurch gekennzeichnet, daß** das Lagerelement eine Flüssigkeit zur Dämpfung der Schwingungsbewegungen enthält.

4. Sitz nach Anspruch 3,
**dadurch gekennzeichnet, daß** der Druck und/oder die Viskosität der Flüssigkeit und/oder der Querschnitt einer Drosselöffnung für die Flüssigkeit zur Veränderung der dämpfenden Eigenschaften des Lagerelementes veränderbar ist bzw. sind.

5. Sitz nach Anspruch 1,
**dadurch gekennzeichnet, daß** die Einrichtung von einem Schwingerreger gebildet wird, der durch entgegengesetzt zur Schwingungsanregung gerichtete Eigenschwingungen die Schwingungen im Sitz (1) reduziert.

6. Sitz nach Anspruch 4 und/oder 5,
**dadurch gekennzeichnet, daß** eine Steuerungs- oder Regelungseinrichtung zur Ansteuerung bzw. Regelung des Lagerelementes und/oder des Schwingerregers sowie eine Sensorik zur Erfassung fahrzeugseitiger und/oder sitzseitiger Parameter vorgesehen ist.

7. Sitz nach einem der vorgenannten Ansprüche,
**dadurch gekennzeichnet, daß** das Lagerelement als Lagerbuchse (8) in wenigstens einer Lagerung eines Lenkers (4, 5) zur Verstellung der Neigung und/oder der Höhe des Sitzteils (2) des Sitzes (1) ausgebildet ist.

8. Sitz nach einem der vorgenannten Ansprüche,
**dadurch gekennzeichnet, daß** wenigstens ein Lenker (4) zur Verstellung der Neigung und/oder der Höhe des Sitzteils (2) des Sitzes (1) selbst schwingungsdämpfend ausgebildet ist.

9. Sitz nach einem der vorgenannten Ansprüche,
**dadurch gekennzeichnet, daß** in wenigstens einen Lenker (4) zur Verstellung der Neigung und/oder der Höhe des Sitzteils (2) des Sitzes (1) ein Dämpfungselement (10) integriert ist.

10. Sitz nach einem der vorgenannten Ansprüche,
**gekennzeichnet durch** Mittel (19) zur Kompensation einer **durch** die Gewichtskraft von Sitz (1) und Insassen erzeugten Vorlast auf die schwingungsdämpfende Einrichtung.

11. Sitz nach einem der vorgenannten Ansprüche,
**gekennzeichnet durch** eine Steuerungs- oder Regelungseinrichtung, die derart auf die Einrichtung zur Dämpfung von Nickschwingungen des Sitzteils (2) und/oder der Rückenlehne (3) des Sitzes (1) wirkt, dass in Abhängigkeit von Parametern aus dem Fahrbetrieb des Fahrzeugs, die Dämpfungs- und Federungseigenschaften des schwingungsdämpfenden Lagerelements veränderbar sind.

12. Sitz nach Anspruch 11,
**dadurch gekennzeichnet, dass** die Einrichtung bei Auftreten einer hohen Beschleunigung in horizontaler Richtung so angesteuert wird, dass sie eine sehr geringe Nachgiebigkeit in horizontaler Richtung aufweist.

13. Sitz nach einem der vorgenannten Ansprüche,
**gekennzeichnet durch** eine Steuerungs- oder Regelungseinrichtung, die derart auf die Einrichtung zur Dämpfung von Nickschwingungen des Sitzteils (2) und/oder der Rückenlehne (3) des Sitzes (1) wirkt, dass in Abhängigkeit von der Gewichtskraft eines Fahrzeuginsassens, die Dämpfungs- und Federungseigenschaften des schwingungsdämpfenden Lagerelements veränderbar sind.

## Claims

1. A seat for a vehicle, comprising a seat part (2) and a back rest (3) and a device for damping vibrations of the seat part (2) and/or back rest (3) about a transverse axis of the seat (1),
**characterised in that** the seat (1) has a belt system integrated in the seat and the device is integrated in a mounting of the seat part (2) or of the back rest (3) on the body (6) of the vehicle or in a mounting of the back rest (3) on the seat part (2) and has at least one vibration-damping bearing element, by which damping insulation in the supercritical range is achieved.

2. A seat according to claim 1,
**characterised in that** the bearing element has a component made of an elastomer material.

3. A seat according to claim 1 or claim 2,
**characterised in that** the bearing element contains a liquid to damp the vibration movements.

4. A seat according to claim 3,
**characterised in that** the pressure and/or the viscosity of the liquid and/or the cross-section of a restricting orifice for the liquid is/are changeable to change the damping properties of the bearing element.

5. A seat according to claim 1,
**characterised in that** the device is formed by a vibration generator, which reduces the vibrations in the seat (1) by natural vibrations directed counter to the vibration stimulation.

6. A seat according to claim 4 and/or claim 5,
**characterised in that** an open loop or closed loop control device is provided for activating or controlling the bearing element and/or the vibration generator, as well as a sensor system for detecting parameters on the vehicle side and/or seat side.

7. A seat according to any one of the aforementioned claims,
**characterised in that** the bearing element is configured as a bearing bush (8) in at least one mounting of a connecting rod (4, 5) for adjusting the inclination and/or the height of the seat part (2) of the seat (1).

8. A seat according to any one of the aforementioned claims,
**characterised in that** at least one connecting rod (4) for adjusting the inclination and/or the height of the seat part (2) of the seat (1) is configured so as to be vibration-damping itself.

9. A seat according to any one of the aforementioned claims
**characterised in that** a damping element (10) is integrated into at least one connecting rod (4) for adjusting the inclination and/or the height of the seat part (2) of the seat (1).

10. A seat according to any one of the aforementioned claims,
**characterised by** means (19) for compensating a preload generated by the weight of the seat (1) and occupants on the vibration-damping device.

11. A seat according to any one of the aforementioned claims,
**characterised by** an open loop or closed loop control device, which acts on the device for damping pitching vibrations of the seat part (2) and/or the back rest (3) of the seat, in that, as a function of parameters from the driving operation of the vehicle, the damping and spring properties of the vibration-damping bearing element can be changed.

12. A seat according to claim 11,
**characterised in that** when a high acceleration in the horizontal direction occurs, the device is activated in such a way that it has a very low yielding capacity in the horizontal direction.

13. Seat according to any one of the aforementioned claims,
**characterised by** an open loop or closed loop control device, which acts on the device for damping pitching vibrations of the seat part (2) and/or the back rest (3) of the seat (1) in such a way that, as a function of the weight of a vehicle occupant, the damping and spring properties of the vibration-damping bearing element can be changed.

## Revendications

1. Siège pour un véhicule comprenant une assise (2) et un dossier (3) ainsi qu'un dispositif pour amortir des oscillations de l'assise (2) et/ou du dossier (3) autour d'un axe transversal du siège (1),
**caractérisé en ce que**
le siège (1) présente un système de ceinture intégré dans le siège, et le dispositif est intégré dans un logement de l'assise (2) ou du dossier (3) sur la carrosserie (6) du véhicule, ou dans un logement du dossier (3) sur l'assise (2) et présente au moins un élément de palier amortisseur d'oscillations qui génère une isolation d'oscillations dans la plage sur-critique.

2. Siège selon la revendication 1,
**caractérisé en ce que**
l'élément de palier présente un composant en matériau élastomère.

3. Siège selon la revendication 1 ou 2,
**caractérisé en ce que**
l'élément de palier contient un liquide pour l'amortissement des mouvements oscillants.

4. Siège selon la revendication 3,
**caractérisé en ce que**
la pression et/ou la viscosité du liquide et/ou la section transversale d'une ouverture d'étranglement pour le liquide est ou sont variables pour modifier les caractéristiques amortissantes de l'élément de palier.

5. Siège selon la revendication 1,
**caractérisé en ce que**
le dispositif est formé par un oscillateur qui réduit les oscillations dans le siège (1) par des oscillations propres opposées à l'excitation d'oscillations.

6. Siège selon la revendication 4 et/ou 5,
**caractérisé en ce qu'**
un dispositif de commande ou de régulation est prévu pour commander ou réguler l'élément de palier et/ou l'oscillateur, et des capteurs sont prévus pour détecter des paramètres du véhicule et/ou du siège.

7. Siège selon l'une quelconque des revendications précédentes,
**caractérisé en ce que**
l'élément de palier présente la forme d'un coussinet (8) situé dans au moins un logement d'un levier (4, 5) pour régler l'inclinaison et/ou la hauteur de l'assise (2) du siège (1).

8. Siège selon l'une quelconque des revendications précédentes,
**caractérisé en ce qu'**
au moins un levier (4) pour le réglage de l'inclinaison et/ou de la hauteur de l'assise (2) du siège (1) est lui-même conçu pour amortir des oscillations.

9. Siège selon l'une quelconque des revendications précédentes,
**caractérisé en ce qu'**
un élément amortisseur (10) est intégré dans au moins un levier (4) pour le réglage de l'inclinaison et/ou de la hauteur de l'assise (2) du siège (1).

10. Siège selon l'une quelconque des revendications précédentes,
**caractérisé par**
des moyens (19) pour la compensation d'une précharge exercée par la force pondérale du siège (1) et du passager sur le dispositif d'amortissement d'oscillations.

11. Siège selon l'une quelconque des revendications précédentes,
**caractérisé par**
un dispositif de commande ou de régulation qui agit sur le dispositif d'amortissement d'oscillations longitudinales de l'assise (2) et/ou du dossier (3) du siège (1) de façon à permettre une modification des caractéristiques d'amortissement et de suspension de l'élément de palier amortisseur d'oscillations en fonction de paramètres de roulement du véhicule.

12. Siège selon la revendication 11,
**caractérisé en ce qu'**
en présence d'une grande accélération dans la direction horizontale le dispositif est commandé pour présenter une très faible souplesse dans la direction horizontale.

13. Siège selon l'une quelconque des revendications précédentes,
**caractérisé par**
un dispositif de commande ou de régulation qui agit sur le dispositif d'amortissement d'oscillations longitudinales de l'assise (2) et/ou du dossier (3) du siège (1) de façon à permettre une modification des caractéristiques d'amortissement et de suspension de l'élément de palier amortisseur d'oscillations en fonction de la force pondérale d'un passager du véhicule.
